# EUROPEAN PATENT APPLICATION

(11) **EP 1 638 221 A1**
(43) Date of publication of application: **22.03.2006**
(21) Application number: 03733525.4
(22) Date of filing: 20.06.2003
(51) Int. Cl.: H04B 7/26

(54) **WCDMA MOBILE COMMUNICATION SYSTEM**

(71) Applicant: FUJITSU LIMITED, Kawasaki-shi, Kanagawa 211-8588 (JP)
(72) Inventor: HU, Rongcai, c/o FUJITSU LIMITED, Kawasaki-shi, Kanagawa 211-8588 (JP); MIYAZAKI, Yasuo, c/o FUJITSU LIMITED, Kawasaki-shi, Kanagawa 211-8588 (JP); TOYODA, Manabu, c/o FUJITSU LIMITED, Kawasaki-shi, Kanagawa 211-8588 (JP)
(74) Representative: Stebbing, Timothy Charles
(86) International application number: PCT/JP2003/007841
(87) International publication number: WO 2004/114552

(57) **Abstract**

A WCDMA mobile communication system that makes it possible for a mobile device to use the minimum radio resources more directly (that is, at the level of an earlier stage) by controlling the states of the uplink and downlink separately, wherein the mobile station includes monitoring unit for monitoring the uplink data flow amount; state determination unit for determining a desired uplink state from the monitoring result of the data flow amount of the monitoring unit; and transmission unit for transmitting a request to establish the uplink state determined by the state determination unit to the base transceiver station apparatus; and the base transceiver station apparatus comprises determination unit for determining an uplink state in response to the uplink state change request; and unit for communicating a change in the determined uplink state by way of response to the mobile station.

## Description

### TECHNICAL FIELD

The present invention relates to a WCDMA (Wideband Code Division Multiple Access) mobile communication system that allows a connected state to be established asymmetrically with respect to an uplink and a downlink in an RRC (Radio Resource Control) layer of a mobile device and base transceiver station apparatus.

### BACKGROUND ART

The RRC (Radio Resource Control) layer of a WCDMA mobile communication system performs services such as the communication of report information for all the mobile devices (UE) in an area to an upper layer, the calling of a specified UE, and connection establishment/modification/release and signal transfer, and so forth. The RRC (Radio Resource Control) layer further comprises a control function for a lower layer protocol for supplying such services.

In addition, in the case of line connection management in the RRC layer, there are four states, namely (1) CELL_DCH, (2) CELL-FACH, (3)CELL_PCH, and (4) URA_PCH and transitions are made to suitable states in accordance with the data flow amount.

Further, in the case of line connection management in the RRC layer, with the conventional technology, the design is such that the states in the uplink and downlink directions are always the same. For example, if the uplink direction is in the CELL_DCH, the downlink direction is also in the same CELL_DCH state.

Further, the data flow amount is monitored by the MAC (Medium Access Control) layer. Based on the information from the MAC layer, the RRC layer is made to make the transition to the following states (1) to (4).

When the state is the (1) CELL-DCH state, in the case of the transport channel, the uplink and downlink both use individual channels (DCH: Dedicated Channel), ortheuplink is a common packet channel (CPCH) and the downlink is a downlink shared channel (DSCH). That is, the uplink and downlink both make the transition to state (1) when the data amount is large.

When the state is the (2) CELL_FACH state, the uplink uses the Random Access Channel (RACH) and the downlink uses the Forward Access Channel (FACH) (the uplink and downlink are not both able to use individual channels DCH). When the data amount is small, the uplink and downlink make the transition to state (2). Further, in this state, the mobile device is at the cell level and the whereabouts thereof can be identified in the network.

When in the (3) CELL_PCH and (4) CELL_PCH states, the uplink and downlink are both unable to send or receive data. That is, the uplink and downlink both enter these states when there is no data. Accordingly, there is no resource allocation. The difference between (3) and (4) is that, in the case of (3), the mobile device is at cell level and the whereabouts thereof can be identified, whereas, in the case of (4), the mobile device is at the registration area level UTRAN, which is a radio access network (RAN) with a wider range than the cell, and the whereabouts thereof are identified.

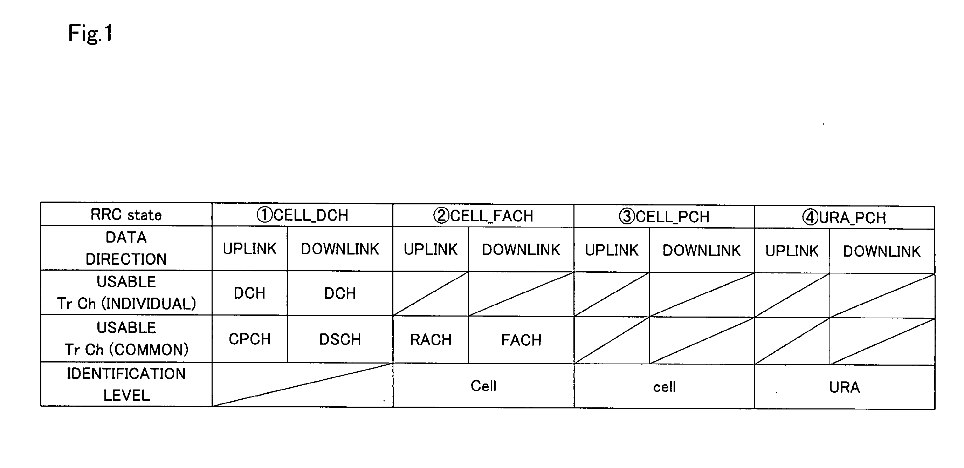

In summary of the above, the relationships shown in Fig. 1 are true.

As described earlier, with the conventional technology, the design is such that the uplink and downlink states are always the same. Hence, the data flow amounts of the uplink state and downlink state are compared and, in order to establish a transition in accordance with a state where the data amount is large, it is necessary to monitor the communication states (conditions) of both the uplink and the downlink even when only the data on one side is flowing temporarily, which is not the most suitable situation from the standpoint of power conservation.

Furthermore, because the design is based on the premise that there is a match between the upper and lower link states, in the (1) CELL-DCH state, for example, only a common channel (CPCH/DSCH) permitting usage in the CELL_DCH state even when the data amount on one side is large and the data amount on the other side is suitably small can be used (RACH and FACH, which are used in (2), are unusable)). Therefore, the usage of radio resources (2) cannot be optimum either.

Therefore, various asymmetric communication systems have been proposed (See Japanese Patent unexamined Publication Nos. 2001-60932 and 2000-316035) in order to effectively use the radio resources because the uplink and downlink data amounts are not always the same in a mobile communication system.

Japanese Patent unexamined Publication No. 2001-60932 discloses an invention relating to a downlink DCH and DSCH switching method and apparatus in the CELL_DCH state. However, this invention is a countermeasure that is limited to a downlink in the CELL_DCH state. Further, the invention that appears in Japanese Patent unexamined Publication No. 2000-316035 is technology that attempts a resolution by dynamically changing the transmission data rate and which makes effective usage of resources indirectly (monitors data amount and manipulates the data rate).

### DISCLOSURE OF THE INVENTION

In view of the conventional technology, an object of the present invention is to provide a WCDMA mobile communication system that judges the data characteristics at the stage preceding the monitored data amount and in which a mobile device is capable of using the minimum radio resources more directly (that is, at the level of an earlier stage) by controlling the states of the uplink and downlink separately.

A further object of the present invention is to provide a WCDMA mobile communication system that, if state control for minimal usage of the radio resources can be performed, same is completed without fiddling with the transmission rate and reception is monitored only when required. Therefore, a WCDMA mobile communication system that is also linked to power conservation is provided.

A first aspect of the WCDMA mobile communication system according to the present invention that achieves the above object is a WCDMA mobile communication system that establishes a communication connection between a base transceiver station apparatus and at least one mobile station, wherein the connection state of the radio resource control (RRC) layer of the mobile station and base transceiver station apparatus is established separately for uplink and downlink.

A second aspect of the WCDMA mobile communication system according to the present invention that achieves the above object is a WCDMA mobile communication system that establishes a communication connection between a base transceiver station apparatus and at least one mobile station, wherein the mobile station comprises monitoring unit for monitoring the uplink data flow amount; state determination unit for determining a desired uplink state from the monitoring result of the data flow amount of the monitoring unit; and transmission unit for transmitting a request to establish the uplink state determined by the state determination unit to the base transceiver station apparatus; and the base transceiver station apparatus comprises determination unit for determining an uplink state in response to the uplink state change request; and unit for communicating a change in the determined uplink state by way of response to the mobile station.

A third aspect of the WCDMA mobile communication system according to the present invention that achieves the above object is a WCDMA mobile communication system that establishes a communication connection between a base transceiver station apparatus and at least one mobile station, wherein the mobile station comprises prediction unit for predicting the data flow amount from the characteristic of uplink data; state determination unit for determining a desired uplink state from the data flow amount predicted by the prediction unit; and transmission unit for transmitting a request to establish the uplink state determined by the state determination unit to the base transceiver station apparatus; and the base transceiver station apparatus comprises determination unit for determining an uplink state in response to the uplink state change request; and unit for communicating a change in the determined uplink state by way of response to the mobile station.

A fourth aspect of the WCDMA mobile communication system according to the present invention that achieves the above object is the WCDMA mobile communication system according to the second or third aspect, wherein the transmission of the uplink state change request to the base transceiver station apparatus by the mobile station is performed by using a dedicated control channel or a common control channel if there is a dedicated control channel and by using a common control channel if there is no dedicated control channel.

A fifth aspect of the WCDMA mobile communication system according to the present invention that achieves the above object is the WCDMA mobile communication system according to the second or third aspect, wherein the response notification of the determined uplink state from the base transceiver station apparatus to the mobile station is transmitted by using a dedicated control channel or a common control channel if there is a dedicated control channel and by using a common control channel if there is no dedicated control channel.

A sixth aspect of the WCDMA mobile communication system according to the present invention that achieves the above object is the WCDMA mobile communication system according to the second or third aspect, wherein the mobile station further comprises unit for making the transition to a state designated by the uplink state change response notification as a result of the mobile station receiving the uplink state change response notification; and transmission unit for transmitting an uplink state change completion notification to the base transceiver station apparatus.

A seventh aspect of the WCDMA mobile communication system according to the present invention that achieves the above object is a WCDMA mobile communication system that establishes a communication connection between a base transceiver station apparatus and at least one mobile station, wherein the base transceiver station apparatus comprises monitoring unit for monitoring the downlink data flow amount; state determination unit for determining a desired downlink state from the monitoring result of the data flow amount of the monitoring unit; and transmission unit for communicating a request to establish the downlink state determined by the state determination unit to the mobile station; and the mobile station comprises unit for establishing the downlink state communicated by the base transceiver station apparatus; and transmission unit for transmitting a downlink state change completion notification to the base transceiver station apparatus.

An eighth aspect of the WCDMA mobile communication system according to the present invention that achieves the above object is a WCDMA mobile communication system that establishes a communication connection between a base transceiver station apparatus and at least one mobile station, wherein the base transceiver station apparatus comprises prediction unit for predicting the data flow amount from the characteristic of downlink data; state determination unit for determining a desired downlink state from the data flow amount predicted by the prediction unit; and transmission unit for transmitting a request to establish the downlink state determined by the state determination unit to the mobile station; and the mobile station comprises unit for establishing a downlink state communicated by the base transceiver station apparatus; and transmission unit for transmitting a downlink state change completion notification to the base transceiver station apparatus.

A ninth aspect of the WCDMA mobile communication system according to the present invention that achieves the above object is the WCDMA mobile communication system according to the seventh or eighth aspect, wherein the transmission of the downlink state change request to the mobile station by the base transceiver station apparatus is performed by using a dedicated control channel or a common control channel if there is a dedicated control channel and by using a common control channel if there is no dedicated control channel.

Characteristics of the present invention will become more evident from an embodiment of the invention that will be described below with reference to the drawings.

### BEST MODE FOR CARRYING OUT THE INVENTION

Embodiments of the present invention will be described hereinbelow with reference to the drawings.

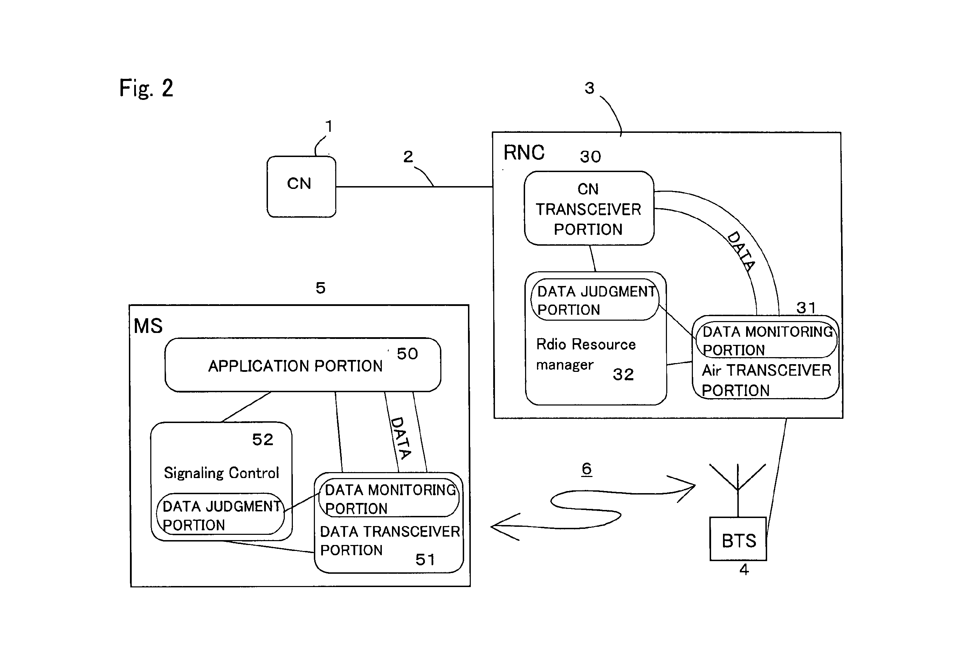

Fig. 2 shows a full image of the WCDMA mobile communication system that comprises an apparatus with the characteristics of the present invention.

A radio network control apparatus (RNC) 3 is connected via a wired signal path 2 to a core network (CN) 1 with functions such as position control, call control, and service control. In addition, a base transceiver station (BTS) 4 that constitutes a radio access network (RAN) together with the radio network control apparatus (RNC) 3, and a mobile station (MS) 5 are connected by a radio line 6. According to the present invention, a radio access network that comprises the radio network control apparatus (RNC) 3 and the base transceiver station (BTS) 4 is known as a base transceiver station apparatus.

The radio network control apparatus (RNC) 3 comprises a CN transceiver portion 30 that constitutes an interface with the core network (CN) 1, an Air transceiver portion 31 comprising a data monitoring portion for performing data monitoring that constitutes an interface with the base transceiver station (BTS) 4 and a radio resource manager 32 that comprises a data judgment portion.

The mobile station 5 comprises an application portion 50, a signaling control portion 52 comprising a data judgment portion, and a data transceiver portion 51 comprising a data monitoring portion that is controlled by the signaling control portion 52.

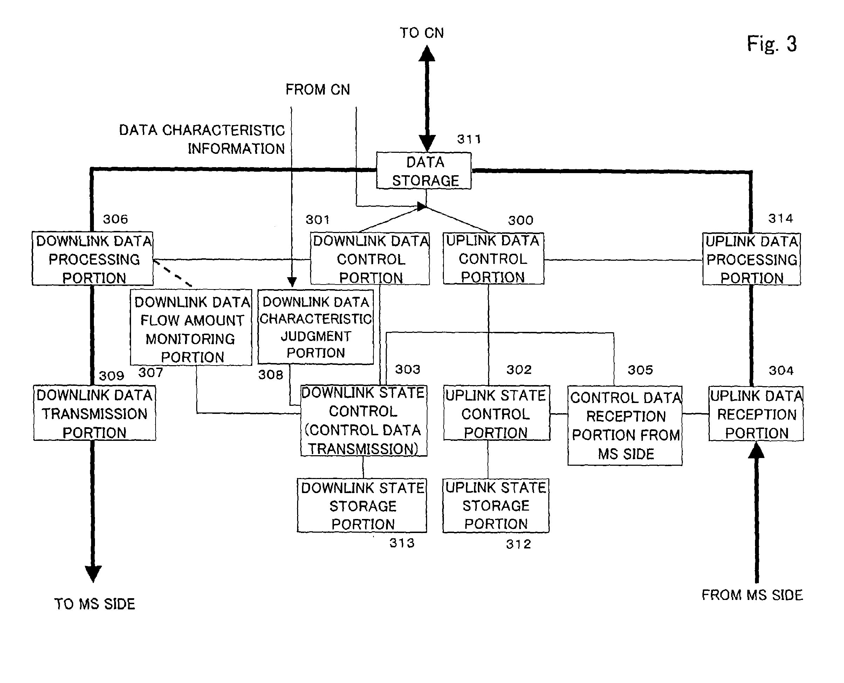

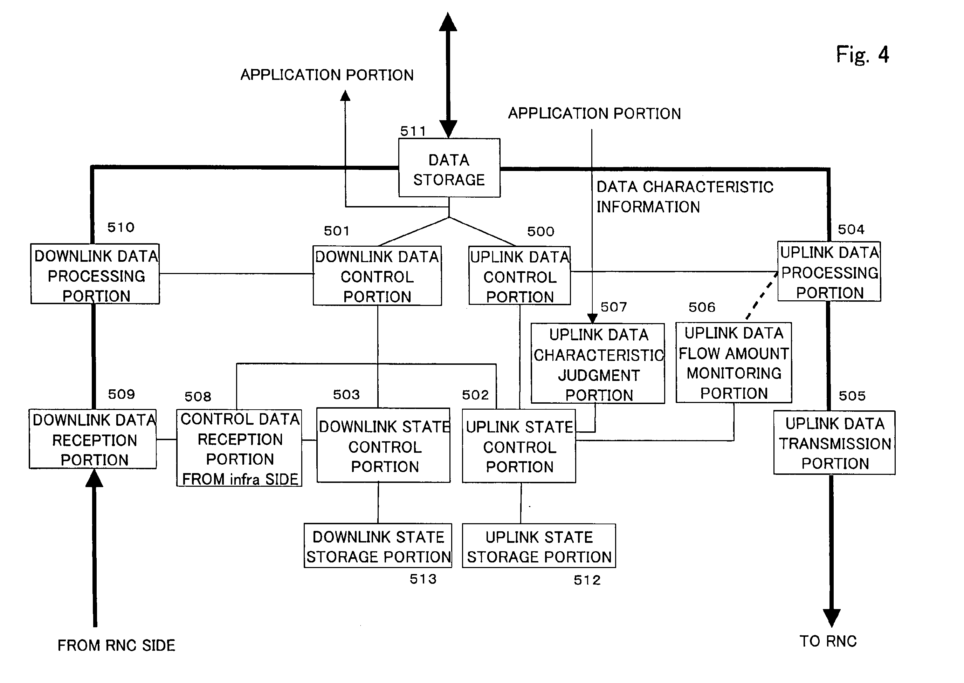

Fig. 3 shows an embodiment according to the present invention of the radio network control apparatus (RNC) 3. Fig. 4 shows an embodiment according to the present invention of the mobile station 5.

The bold lines in Figs. 3 and 4 represent the flow of control and traffic data, while the narrow solid lines are control data and the dotted lines show the monitoring.

In the case of the radio network control apparatus (RNC) in Fig. 3, the radio resource manager 32 shown in Fig. 2 corresponds to an uplink data control portion 300 that corresponds to the RRC layer, a downlink data control portion 301, an uplink state control portion 302, and a downlink state control portion 303.

Further, in the case of the mobile station portion 5 in Fig. 4, the signaling control portion 52 corresponds to an uplink data control portion 500 that corresponds to the RRC layer, a downlink data control portion 501, an uplink state control portion 502, and a downlink state control portion 503 in Fig 4.

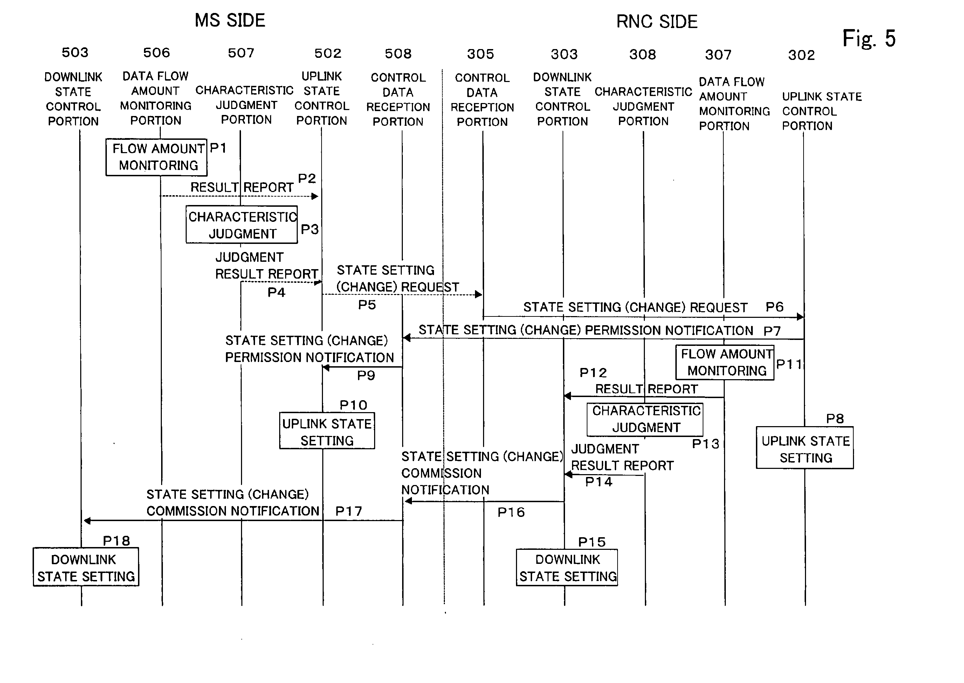

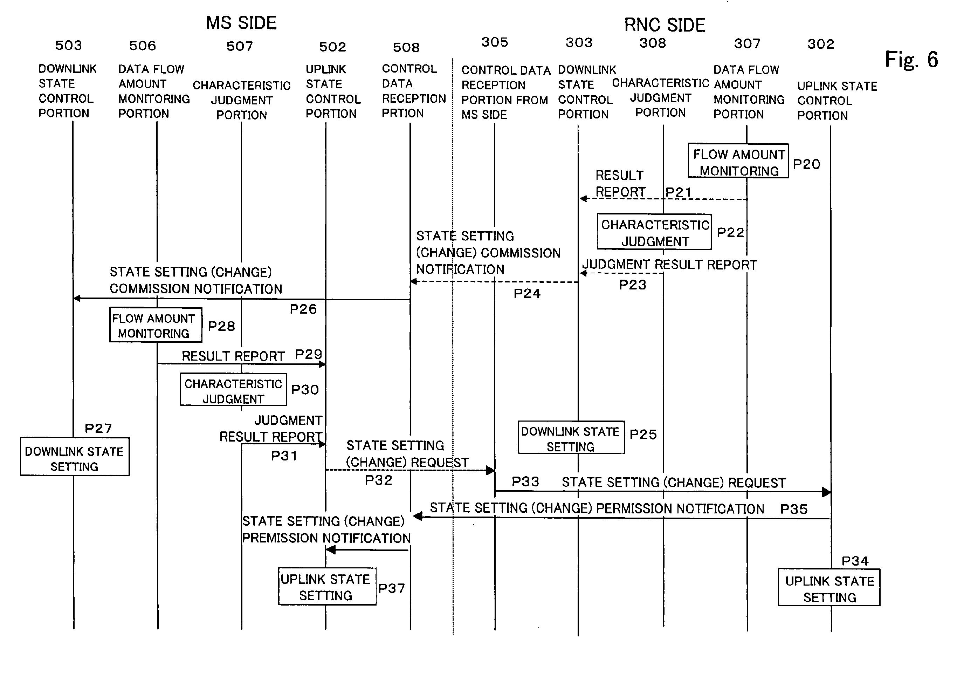

Figs. 5 and 6 show the procedure of processing by the radio network control apparatus (RNC) 3 and mobile station 5 shown in Figs. 3 and 4. In addition, Fig. 5 represents the processing procedure for a case where uplink information is handled first (that is, a case where action from the side of the mobile station 5 is early) and Fig. 6 represents the processing procedure for a case where downlink information is handled first (that is, the radio network control apparatus (RNC) 3.

The content of processing by the radio network control apparatus (RNC) 3 and mobile station 5 shown in Figs. 3 and 4 will be described hereinbelow with reference to Figs. 5 and 6.

First, the operation of the radio network control apparatus (RNC) 3 and mobile station 5 will first be described by taking a case where the uplink information shown in Fig. 5 is handled first as an example.

In the mobile station 5 shown in Fig. 4, data that is produced by means of the application portion 50 is inputted to an uplink data processing portion 504 while being buffered by means of a data storage portion 511. The data flow amount of the data that is inputted to the uplink data processing portion 504 is monitored by means of a data flow amount monitoring portion 506 (processing step 21) . The result of the flow amount monitoring is reported to the uplink state control portion 502 (processing step P2).

At the same time, the uplink data characteristic is judged on the basis of the data characteristic information from the application portion 50 by means of an uplink data characteristic judgment portion 507 (processing step P3). The characteristic judgment result is also reported to the uplink state control portion 502 (processing step P4).

Here, the data flow amount can also be predicted from the data characteristic, as will be described subsequently. Therefore, the inflow amount may also be predicted from the data characteristic by means of the data characteristic judgment portion 507 by omitting the data flow amount monitoring portion 506.

The uplink state control portion 502 sends a state setting request to the base transceiver station apparatus side via the uplink data control portion 500, the uplink data processing portion 504, and an uplink data transmission portion 505 on the basis of the reported data flow amount and data characteristic (processing step P5).

Thereupon, if there is a dedicated control channel (DCCH), the state setting request to the base transceiver station apparatus side is transmitted by using a DCCH or common control channel (CCCH) and, if there is no DCCH, the state setting request to the base transceiver station apparatus side is transmitted by using the CCCH.

On the other hand, in the case of the radio network control apparatus 3 on the side of the base transceiver station apparatus shown in Fig. 3, the state setting request from the mobile station 3 is received by an uplink data reception portion 304 and only the control data is sent to a control data reception portion 305. The control data reception portion 305 transfers the state setting request to the uplink state control portion 302 (processing step P6).

The uplink state control portion 302 sends back a notification with regard to state setting permission to the mobile station 3 via a downlink data processing portion 306 and a downlink data transmission portion 309 (processing step P7). At the same time, the corresponding uplink state is established and stored in an uplink state storage memory 312 (processing step P8).

The transmission of a response to the state setting request to the side of the mobile station 3 (processing step P7) is performed by using a DCCH or CCCH if there is a DCCH and by using a CCCH if there is no DCCH.

Returning now to Fig. 4, upon receiving the state setting permission notification from the RNC side, the control data reception portion 508 transfers the state setting permission notification to the uplink state control portion 502 (processing step P9). Therefore, the uplink state control portion 502 stores the permitted uplink state in the uplink state storage memory 512 (processing step P10). As a result, the uplink direction state is set in sync for the mobile station side and RNC side.

On the other hand, in this state, the data flow amount is monitored by the downlink data flow amount monitoring portion 307 of the base transceiver station apparatus side (processing step P11) and the monitoring results are communicated to the downlink state control portion 303 (processing step P12).

At the same time, data characteristics are judged on the basis of the data characteristic information from the core network (CN)1 by means of an RNC-side downlink data characteristic judgment portion 308 (processing step P13) and the results are reported to the downlink state control portion 303 (processing step P14).

Therefore, the downlink state control portion 303 establishes and stores the downlink state in the downlink state storage memory 313 on the basis of the reported downlink data flow amount and data characteristic (processing step P15) and communicates the state setting request to the mobile station side at the same time (processing step P16).

The mobile station side shown in Fig. 4 receives the downlink state setting request notification from the RNC to the control data reception portion 508 and transfers the downlink state setting request notification to the downlink state control portion 503 (processing step P17). As a result, the downlink state control portion 503 stores the downlink state to the downlink state storage memory 513 (processing step P18).

Therefore, the downlink direction states are established in sync for the mobile station side and RNC side.

Similarly, the operation of the radio network control apparatus (RNC) 3 and mobile station 5 will be described with a case where downlink information is handled first serving as an example by means of Fig. 6.

In the case of the radio network control apparatus 3 shown in Fig. 3, the data that is produced by means of the core network (CN) 1 is inputted to the downlink data processing portion 306 while being buffered by means of the data storage portion 311. The data flow amount of the data that is inputted to the downlink data processing portion 306 is monitored by means of the downlink data flow amount monitoring portion 307 (processing step P20). The monitoring results are reported to the downlink state control portion 308 (processing step P21).

At the same time, the downlink data characteristic is judged on the basis of the data characteristic information from the core network (CN) 1 by means of the downlink data characteristic judgment portion 308 (processing step P22). The characteristic judgment results are also reported to the downlink state control portion 303 (processing step P23).

Further, as described earlier for the mobile station side, the downlink data flow amount can also be predicted from the data characteristic. Therefore, the inflow amount may also be predicted from the data characteristic by means of the data characteristic judgment portion 308 by omitting the data flow amount monitoring portion 307.

The downlink state control portion 303 sends a state setting request to the mobile station side via the downlink data control portion 301, the downlink data processing portion 306, and a downlink data transmission portion 309 on the basis of the reported data flow amount and data characteristic (processing step P24). At the same time, the downlink state corresponding with the state setting request is established and stored in the downlink state storage memory 312 (processing step P25). As a result, the downlink states are synchronized for the RNC side and mobile station side.

On the other hand, in the case of the mobile station side shown in Fig. 4, the flow amount of the uplink direction data that is generated by the application portion 50 is monitored by the uplink data flow amount monitoring portion 506 (processing step P28), and the monitoring results are communicated to the uplink state control portion 502 (processing step P29).

At the same time, the data characteristic is judged on the basis of the data characteristic information from the core application 1 by means of the uplink data characteristic judgment portion 507 (processing step P30) and the judgment results are reported to the uplink state control portion 502 (processing step P31). Therefore, the uplink state control portion 502 communicates the state setting request to the mobile station side on the basis of the reported uplink data flow amount and data characteristic (processing step P32).

The mobile station side shown in Fig. 3 receives the downlink state setting request notification from the mobile station side by means of the control data reception portion 305 and transfers the downlink state setting request notification to the uplink state control portion 302 (processing step P33). As a result, the uplink state control portion 302 stores an uplink state in the uplink state storage memory 312 (processing step P34).

At the same time, the uplink state control portion 302 sends a state setting permission notification to the mobile station side (processing step P35). When the state setting permission notification is received by the control data reception portion 508 on the mobile station side in Fig. 4, the uplink state control portion 302 transfers the state setting permission notification to the uplink state control portion 502 (processing step P36) and the uplink state is established and stored in the uplink state storage memory 512 (processing step P37).

As a result, uplink states are also established in sync for the RNC side and mobile station side.

As detailed earlier, according to the present invention, it is possible to establish individual states for the uplink and downlink directions. As a result, for example, when a case where data is sent and received is cited by way of example, mail and internet browsing is mainly one-directional communication. Accordingly, by using the present invention, resources can be adopted more effectively.

Furthermore, when a speech call case is cited by way of example, a situation where two people are speaking at the same time is rare. Generally speaking, one person speaks while the other listens. Even in cases where a partner responds immediately, it may be said that there is an adequate time difference from the perspective of the base transceiver station apparatus and mobile station that are controlled in ms units. Accordingly, the method of the present invention can also be effectively adopted in the case of a speech call.

Further, in the case of the above embodiment, the uplink data flow amount is monitored by the uplink data flow amount monitoring portion 506 in the mobile station but, as detailed earlier, the data flow amount can also be predicted from the uplink data characteristic.

For example, in a case where a cellular phone is used to perform live or other picture transfer services by means of RTP (Real-time Transport Protocol), it can be judged at the time services are started that the terminal sending the pictures only has uplink data and the terminal receiving the pictures only has downlink data. Therefore, in this case, the monitoring of the data flow amount need not be performed and, at the time a communication link is created, the terminal sending the pictures may enter an uplink CELL_DCH/downlink CELL_PCH (URA_PCH) state and the terminal receiving the pictures may enter an uplink CELL_PCH (URA_PCH) /downlink CELL_DCH state. Information on a variety of data characteristics can be acquired from the application portion 50 and NAS (Non Access Stratum) layer and so forth.

Similarly, the data flow amount may be predicted on the basis of the data characteristics of the downlink data characteristic judgment portion 308 instead of the data flow amount monitoring by the downlink data flow amount monitoring portion 307 also on the side of the base transceiver station apparatus.

As a result of applying the present invention, the RRC layer is able to make the transition to the (3) CELL_PCH or (4) URA_PCH state at the time it is judged that there is no data transmission. As a result, monitoring of the data is unnecessary and the mobile station side need only pay attention to information from the PCH (Paging Channel) when the downlink state is (3) CELL_PCH or (4) URA_PCH and the RNC side need only pay attention to information relating to a URA update or cell update procedure when the uplink state is (3) CELL_PCHor (4) URA_PCH. Theconsumedelectric power also decreases as a result of the consumed electric power that accompanies the conventional monitoring of the uplink and downlink, which is linked with the conservation of electric power.

More specifically, when the monitoring of the data flow amount is unnecessary, because there is no need to operate the LSI that operates during monitoring in the control mechanism portion, this is linked to a reduction in the consumed electric power.

For example, when there is no downlink data and there is a large amount of uplink data, the downlink state is CELL_PCH or URA_PCH and the uplink state is CELL_DCH, whereby there is no need to allocate a downlink channel and therefore also no need to monitor the downlink channel. Hence, the consumed electric power of the mobile station decreases.

Further, in a case where there is little downlink data and a large amount of uplink data, supposing that the downlink state is CELL_FACH and the uplink state is CELL_DCH, FACH is used as the downlink channel and there is no excessive DSCH occupancy, whereby the allocation of radio resources can be more suitably performed.

Here, if it is possible to predict the data flow amount from the data characteristics, the data flow amount need not be monitored. For example, in a case where a cellular phone is used to perform live or other picture transfer services by means of RTP (Real-time Transport Protocol), the terminal that sends pictures only has uplink data and the terminal that receives pictures only has downlink data. However, because this division takes place when services commence, monitoring of the data flow amount need not be performed. At the time the communication link is created, the terminal sending pictures may be placed in the uplink CELL_DCH/downlink CELL_PCH (URA_PCH) state and the terminal receiving pictures may be placed in the uplink CELL_PCH (URA_ PCH)/downlink CELL_DCH state. Information on the data characteristics can be acquired from the application portion 50 and NAS layer, and so forth.

### INDUSTRIAL APPLICABILITY

The WCDMA mobile communication system according to the present invention establishes different states according to requirements for uplink and downlink connection states in the RRC layer of a mobile station and base transceiver station apparatus, there being no excessive channel monitoring and little consumed electric power. Moreover, because excessive channels are not used exclusively, an increase in the system subscriber capacity can be achieved.

## Claims

1. A WCDMA mobile communication system that establishes a communication connection between a base transceiver station apparatus and at least one mobile station,
wherein the connection state of the radio resource control (RRC) layer of the mobile station and base transceiver station apparatus is established separately for uplink and downlink.

2. A WCDMA mobile communication system that establishes a communication connection between a base transceiver station apparatus and at least one mobile station,
wherein the mobile station comprises:
a monitoring unit for monitoring the uplink data flow amount;
a state determination unit for determining a desired uplink state from the monitoring result of the data flow amount of the monitoring unit; and
a transmission unit for transmitting a request to establish the uplink state determined by the state determination unit to the base transceiver station apparatus; and
the base transceiver station apparatus comprises:
a determination unit for determining an uplink state in response to the uplink state change request; and
a unit for communicating a change in the determined uplink state by way of response to the mobile station.

3. A WCDMA mobile communication system that establishes a communication connection between a base transceiver station apparatus and at least one mobile station,
wherein the mobile station comprises:
a prediction unit for predicting the data flow amount from the characteristic of uplink data;
a state determination unit for determining a desired uplink state from the data flow amount predicted by the prediction unit; and
a transmission unit for transmitting a request to establish the uplink state determined by the state determination unit to the base transceiver station apparatus; and
the base transceiver station apparatus comprises:
a determination unit for determining an uplink state in response to the uplink state change request; and
a unit for communicating a change in the determined uplink state by way of response to the mobile station.

4. The WCDMA mobile communication system according to claim 2 or 3, wherein the transmission of the uplink state change request to the base transceiver station apparatus by the mobile station is performed by using a dedicated control channel or a common control channel if there is a dedicated control channel and by using a common control channel if there is no dedicated control channel.

5. The WCDMA mobile communication system according to claim 2 or 3, wherein the response notification of the determined uplink state from the base transceiver station apparatus to the mobile station is transmitted by using a dedicated control channel or a common control channel if there is a dedicated control channel and by using a common control channel if there is no dedicated control channel.

6. The WCDMA mobile communication system according to claim 2 or 3, wherein the mobile station further comprises:
a unit for making the transition to a state designated by the uplink state change response notification as a result of the mobile station receiving the uplink state change response notification; and
a transmission unit for transmitting an uplink state change completion notification to the base transceiver station apparatus.

7. A WCDMA mobile communication system that establishes a communication connection between a base transceiver station apparatus and at least one mobile station, wherein the base transceiver station apparatus comprises:
a monitoring unit for monitoring the downlink data flow amount;
a state determination unit for determining a desired downlink state from the monitoring result of the data flow amount of the monitoring unit; and
a transmission unit for communicating a request to establish the downlink state determined by the state determination unit to the mobile station; and
the mobile station comprises:
a unit for establishing the downlink state communicated by the base transceiver station apparatus; and
a transmission unit for transmitting a downlink state change completion notification to the base transceiver station apparatus.

8. A WCDMA mobile communication system that establishes a communication connection between a base transceiver station apparatus and at least one mobile station, wherein the base transceiver station apparatus comprises:
a prediction unit for predicting the data flow amount from the characteristic of downlink data;
a state determination unit for determining a desired downlink state from the data flow amount predicted by the prediction unit; and
a transmission unit for transmitting a request to establish the downlink state determined by the state determination unit to the mobile station; and
the mobile station comprises:
a unit for establishing a downlink state communicated by the base transceiver station apparatus; and
a transmission unit for transmitting a downlink state change completion notification to the base transceiver station apparatus.

9. The WCDMA mobile communication system according to claim 7 or 8, wherein the transmission of the downlink state change request to the mobile station by the base transceiver station apparatus is performed by using a dedicated control channel or a common control channel if there is a dedicated control channel and by using a common control channel if there is no dedicated control channel.
